# EUROPEAN PATENT SPECIFICATION

(11) **EP 2 875 674 B1**
(45) Date of publication and mention of the grant of the patent: **20.05.2020**
(21) Application number: 13819467.5
(22) Date of filing: 16.07.2013
(51) Int. Cl.: H04W 40/24, B61L 27/00, B61L 27/04, H04L 12/26, H04W 48/08, H04L 12/24, B61L 15/00

(54) **INTRA-TRAIN NETWORK MANAGEMENT SYSTEM**
ZUGINTERNES NETZWERKVERWALTUNGSSYSTEM
SYSTÈME DE GESTION DE RÉSEAU INTERNE À UN TRAIN

(30) Priority: 17.07.2012 US 201261672624 P
(43) Date of publication of application: 27.05.2015
(73) Proprietor: Thales Canada Inc., Toronto, Ontario M3B 0A4 (CA)
(72) Inventor: MACKENZIE, Ivan, Don Mills, Ontario M3C 2A9 (CA)
(74) Representative: Talbot-Ponsonby, Daniel Frederick
(86) International application number: PCT/CA2013/000643
(87) International publication number: WO 2014/012164

(56) References cited:
- WO-A1-00/52851
- WO-A2-2011/084251
- CN-C- 1 263 261
- DE-A1-102010 010 074
- US-A1- 2006 180 709
- US-B2- 8 014 320

## Description

### Field of the Invention

This invention relates to the field of train management, and in particular an intratrain network management system for example for multi-unit trains operated using a Communications-Based Train Control (CBTC).

### Background of the Invention

Trains within modern transit systems are often controlled using CBTC technology, wherein the trains communicate with each other on a peer-to-peer basis over a broadband wireless network. One such exemplary system is known as SeltracTM by Thales.

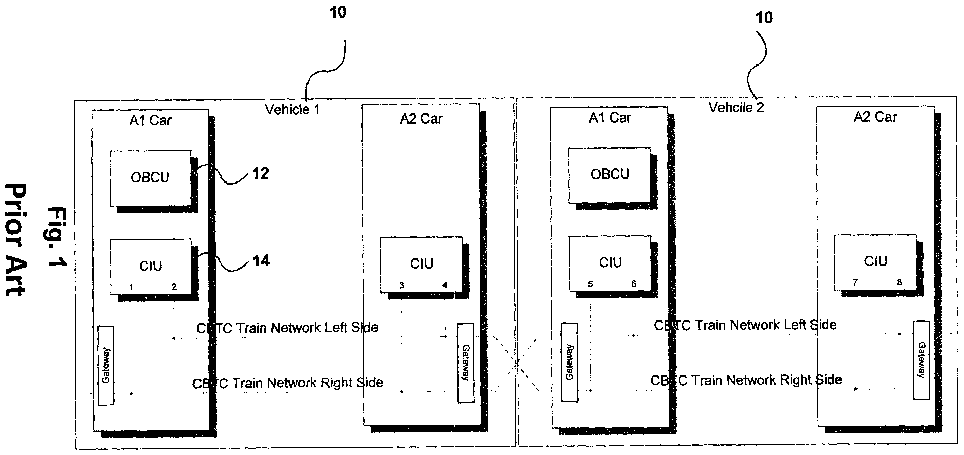

Each train is made up of one or more train units, or vehicles, each of which train unit typically comprises two or more cars. Each unit has an OBCU (On-Board Control Unit) that communicates with other trains and controls the operation of the unit. Each car within each train unit contains at least one CIU (Communications Interface Unit) that establishes two separate networks between the nodes within the units for redundancy purposes. The separate networks are referred to as the left side and right side networks (known as the neuron ID). These networks are configured such that specific nodes in one car are linked to specific nodes in the other car. For example, in Figure 1, the left side network links nodes 2 and 4 respectively in cars A1 and A2, whereas the right side network links nodes 1 and 3 respectively in cars A1 and A2. The arrangement in train unit 2 is similar. Nodes 6 and 8 are linked by the left side network and nodes 5 and 7 are linked by the right side network.

While the cars within a unit operate at all times as a unit and are not separated during normal operation of the system, the units can be coupled together as desired to form longer trains under operator control. For example, in Figure 1, two train units, each consisting of two cars, are joined together to form a two-vehicle (four-car) train. The number of cars in each train unit is not important. There could be any number of intermediate cars between the end or terminal cars shown. Each CIU is connected to a gateway for external communications.

When the units are linked together, the networks in the individual units are linked together to form intratrain networks. The network sides in each unit are crossed over to ensure that the same network nodes in the train are connected to each other regardless of vehicle orientation. This arrangement works for trains consisting of only two train units. For example, in Figure 1, the following four nodes are always connected:

| | |
|---|---|
| A1, right side node in vehicle 1 | (node 1) |
| A2, right side node in vehicle 1 | (node 3) |
| A1, left side node in vehicle 2 | (node 6) |
| A2, left side node in vehicle 2 | (node 8) |

In this system, each CIU can discover the network topology by broadcasting a global device discovery message. This is sent to all devices on the network, which respond accordingly and allow the CIU to build routing tables that allows it to reach any device with which it needs to communicate.

However, this system does not work when three or more train units are coupled in tandem because certain corresponding network devices in different train units are coupled to the same network side resulting in an ambiguity as will be explained in more detail. Trains consisting of three or more units have been protected by manual procedures because no on-board automatic train protection (ATP) was provided by the CBTC system. Lack of on-board ATP increases the likelihood of a hazardous event (e.g. collision). US20060180709 describes an IP-based train communication system. DE102010010074 discloses a train communication system having two lines.

### Summary of the Invention

According to a first aspect of the present invention there is provided an intratrain network management system for a train comprising up to three train units coupled together to form a train, each train unit comprising two terminal cars and zero or more intermediate cars between the terminal cars, the intratrain network management system comprising a communications interface unit in each terminal car configured to establish at least two separate Communications-Based Train Control (CBTC) peer-to-peer networks within its associated train unit, wherein each network connects to distinct nodes within the train unit, and wherein the separate networks of coupled train units are crossed over between train units; and a gateway associated with each terminal car for linking the respective networks of separate train units coupled into a train; and wherein the network management system is configured to determine network topology within the train by sending: a) global device discovery messages throughout the networks, and b) local discovery messages within each train unit that are addressed such that they cannot penetrate the gateway(s) associated with that train unit; wherein an on-board train controller (12) is configured to build routing tables based on the determined network topology and to set a subnet mask of the local discovery messages to a value that will not penetrate the local gateway.

The local discovery messages may be sent out and managed by the communications interface units.

These message resolve the ambiguity present in the prior art systems when more than two train units were coupled together. The discovery messages are preferably in the form of pings.

By taking advantage of behaviours of the on-board network gateway devices that route network messages between vehicles, the network management software can construct a complete set of routing tables for a train consisting up to three train units. With a complete routing table defined, the OBCUs can determine the size of the train, and their location within it. Knowledge of the train size and their location allows the OBCUs to provide full on-board automatic train protection.

In another aspect the invention provides a method of managing a network management system in a train comprising up to three train units coupled together to form a train, each train unit comprising two terminal cars and zero or more intermediate cars between the terminal cars, the method comprising: providing a communications interface unit in each terminal car; establishing with said communications interface unit at least two separate Communications-Based Train Control (CBTC) peer-to-peer networks within each associated train unit, wherein each network connects to distinct nodes within the train unit, and wherein the separate networks of coupled train units are crossed over between train units; associating a gateway with each terminal car in order to link the respective networks of separate train units coupled into a train; determining network topology within the train by sending: a) global device discovery messages throughout the networks, and b) local discovery messages within each train unit that are addressed such that they cannot penetrate the gateway(s) associated with that train unit; and building routing tables for the networks based on the determined network topology, wherein a subnet mask of the local discovery messages are set to a value that will not penetrate a local gateway of the train units.

In a still further aspect the invention provides a communications interface unit in accordance with the first aspect above.

### Detailed Description of the Drawings

The invention will now be described in more detail, by way of example only, with reference to the accompanying drawings, in which:-
Figure 1 is a diagram of a prior art intratrain communication system; and
Figure 2 is a diagram of an intratrain communication system in accordance with an embodiment of the invention.

### Detailed Description of the Invention

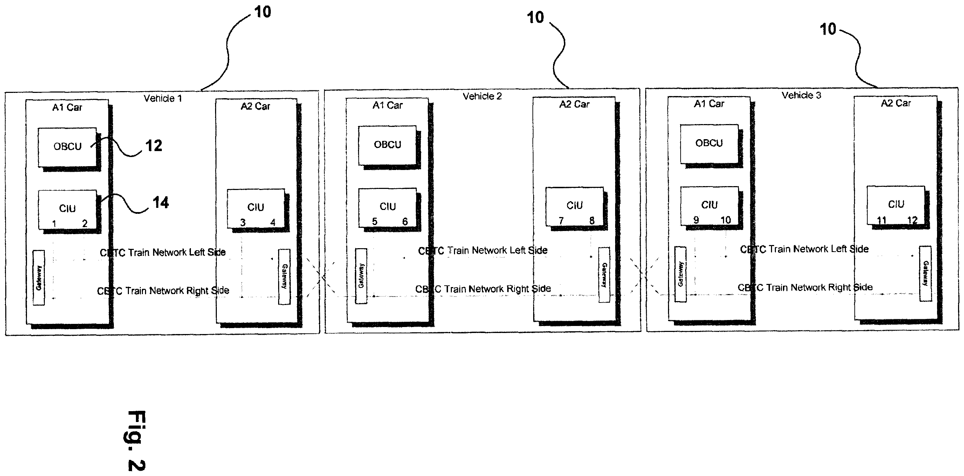

Referring now to Figure 2, three or more train units 10, also referred to as vehicles, are coupled together to form a train. Each train unit or vehicle contains an OBCU 12 controlling overall operation of the train unit. In addition, each car contains a CIU 14 for managing the intratrain network. The CIU may suitably be a Thales CIU forming part of the Seltrac™ system. The train units form an integral unit during normal operation and are not separated under operator control. By contrast the separate train units can be coupled and uncoupled at will by the operator. This poses challenges since the network must reconfigure itself each time the train configuration is changed.

With the exception of the novel aspect to be described the network management system generally operates in a conventional manner using a configuration based on LonWorks™ network technology developed by Echelon Corporation. A suitable CBTC system is the Seltrac™ system referred to above.

The network topology is an important part of the architecture because it permits the OBCU 12 to identify which CIU 14 nodes are part of the same train unit via the nodes attributes, namely A1 or A2 car, left side or right side network.

The problem of identifying a CIU to a train unit arises because of multiple limitations in the architecture that must be circumvented. The train unit Identification (ID) number, which is assigned to a train unit, cannot be transferred to all CIUs because in a CBTC system the train unit includes a Monitoring Diagnostic System (MD) connected to the CIUs in the A2 car CIUs and not to the A1. Using the CBTC network to transfer the information is not a valid option. The A1 car needs a train unit ID to find out in which train unit it is and to initialize the CBTC network. The A2 car needs an initialized CBTC network to send the ID of the train unit to the A1 car.

The physical network topology of a multi-car train consist changes depending on how the cars are connected. While a changing topology is a problem in itself, some topologies, such as illustrated in Figure 1, do not permit identification because of the symmetry in the attributes.

A viable physical network connectivity solution requires that two rules be fulfilled. First, the network wiring should have a fixed network topology independent of the physical train interconnection. The possible physical train interconnections are: A1/A2 connected, A1/A1 connected, or A2/A2 connected. Second, the network wiring should have a configuration that permits node differentiation.

One solution in accordance with an embodiment is shown in Figure 2. In this solution there is no crossing of the left/ right networks between A1 and A2 cars, whereas there is crossing of the left/right networks between the train units.

In this case, the physical configuration should follow the rules:
a) Two A1 CIU units, on separate train units, will always be connected to two opposite networks: left to right and right to left.
b) Two A2 CIU units, on separate R143 units, will always be connected to two opposite networks: left to right and right to left.
c) An A1 CIU and an A2 CIU, on the same train unit, will always be connected to the same network: left to left and right to right.

Item c is used to determine which CIU units are part of the same train unit.

The CIUs in each car build routing tables by sending out global discovery messages to all the nodes in the network in a conventional fashion. However, as can be seen in Figure 2, the LonWorks protocol only applies in the case of a two-unit train. In the case of a three unit train a double cross over occurs. As a result an ambiguity arises as a result of similar nodes being connected to the same network sides in different train units. For example, in the example shown in Figure 2 the following nodes connections exist:

| | |
|---|---|
| A1, right side node in vehicle 1 | (node 1) |
| A2, right side node in vehicle 1 | (node 3) |
| A1, left side node in vehicle 2 | (node 6) |
| A2, left side node in vehicle 2 | (node 8) |
| A1, right side node in vehicle 3 | (node 9) |
| A2, right side node in vehicle 3 | (node 11) |

It will be seen that, for example, the right side node 3 in train unit 1, car A2, is also connected to right side nodes 9 and 11 in vehicle 3 as well as the right side node 1 in vehicle 1. In this train configuration the "fixed configuration" present in the two-unit train does not exist, and "global device discovery" messages cannot distinguish between the locations of certain network devices (i.e. A2, right side node in vehicle 1 and A2, right side node in vehicle 3 are in the same network).

In order to overcome this problem, in an embodiment of the invention, in addition to global discovery messages as known in the prior art, each CIU broadcasts "local device discovery" messages, which are blocked by the gateways within the train unit containing the CIU.

These messages are addressed in such a way that they are broadcast within a given vehicle (i.e. local broadcast), but are blocked by the vehicle's gateway devices from propagating to the network nodes in the other vehicles. This allows each vehicle to distinguish between the "local" and "remote" network nodes. With the additional knowledge of "local" vs. "remote" network nodes, network management for a 3-vehicle train is achieved. This information can be used to build a routing table to permit the CIUs to communicate with any desired node.

The remaining network management system operates as in a conventional 1 or 2-unit train.

The following table shows the existing prior art train logic for two-unit trains. In this table a node can be considered a network interface on the CIU. Each network interface has a unique ID. For the purpose of this example, they are numbered 1 to 8. For example, node 1 in vehicle 1 is locally connected to node 3 in vehicle (train unit) 1, otherwise (i.e. not locally) connected to nodes 6, 8 in vehicle 2, and not connected to nodes 2, 4 in vehicle 1 and nodes 5, 7 in vehicle 2.

| Vehicle | Node | Cab (A1 or A2) | Network (LS or RS) | Network (1 or 2) | Local/Other Determination Table (L = Local, R = Remote, S = Same node, -- = Nodes not connected) | | | | | | | |
|---|---|---|---|---|---|---|---|---|---|---|---|---|
| 1 | 1 | A1 | RS | 1 | S | -- | L | -- | -- | O | -- | O |
| | 2 | A1 | LS | 2 | -- | S | -- | L | O | -- | O | -- |
| | 3 | A2 | RS | 1 | L | -- | S | -- | -- | O | -- | O |
| | 4 | A2 | LS | 2 | -- | L | -- | S | O | -- | O | -- |
| 2 | 5 | A1 | RS | 2 | -- | O | -- | O | S | -- | L | -- |
| | 6 | A1 | LS | 1 | O | -- | O | -- | -- | S | -- | L |
| | 7 | A2 | RS | 2 | -- | O | -- | O | L | -- | S | -- |
| | 8 | A2 | LS | 1 | O | -- | O | -- | -- | L | -- | S |
| | | | | Vehicle | 1 | | | | 2 | | | |
| | | | | Node | 1 | 2 | 3 | 4 | 5 | 6 | 7 | 8 |
| | | | | A1 or A2 | A1 | A1 | A2 | A2 | A1 | A1 | A2 | A2 |
| | | | | LS or RS | RS | LS | RS | LS | RS | LS | RS | LS |
| | | | | 1 or 2 | 1 | 2 | 1 | 2 | 2 | 1 | 2 | 1 |

A1 or A2 Indicates in which car a node is located. This information is provided by discrete input/output (I/O) to the CIU. LS or RS indicates to which network a node is located, within a given unit. This information is provided by discrete I/O to the CIU. The 1 or 2 is a number given to the network that connects half of the nodes. If the numbers are different the nodes are not physically connected and therefore cannot communicate. The "Local Other" determination matrix uses a user defined function called "LocalOther()".

A three-unit train connected in accordance with the prior art would employ the following logic.

| Vehicl | Nod | Cab (A1 or A2) | Network (LS or RS) | Networ (1 or 2) | Local/Other Determination Table (L = Local, R = Remote, S = Same node, -- = Nodes not connected) | | | | | | | | | | | |
|---|---|---|---|---|---|---|---|---|---|---|---|---|---|---|---|---|
| 1 | 1 | A1 | RS | 1 | S | -- | L | -- | -- | O | -- | O | S | -- | L | -- |
| | 2 | A1 | LS | 2 | -- | S | -- | L | O | -- | O | -- | -- | S | -- | L |
| | 3 | A2 | RS | 1 | L | -- | S | -- | -- | O | -- | O | L | -- | S | -- |
| | 4 | A2 | LS | 2 | -- | L | -- | S | O | -- | O | -- | -- | L | -- | S |
| 2 | 5 | A1 | RS | 2 | -- | O | -- | O | S | -- | L | -- | -- | O | -- | O |
| | 6 | A1 | LS | 1 | O | -- | O | -- | -- | S | -- | L | O | -- | O | -- |
| | 7 | A2 | RS | 2 | -- | O | -- | O | L | -- | S | -- | -- | O | -- | O |
| | 8 | A2 | LS | 1 | O | -- | O | -- | -- | L | -- | S | O | -- | O | -- |
| 3 | 9 | A1 | RS | 1 | S | -- | L | -- | -- | O | -- | O | S | -- | L | -- |
| | 10 | A1 | LS | 2 | -- | S | -- | L | O | -- | O | -- | -- | S | -- | L |
| | 11 | A2 | RS | 1 | L | -- | S | -- | -- | O | -- | O | L | -- | S | -- |
| | 12 | A2 | LS | 2 | -- | L | -- | S | O | -- | O | -- | -- | L | -- | S |
| | | | | Vehicle | 1 | | | | 2 | | | | 3 | | | |
| | | | | Node | 1 | 2 | 3 | 4 | 5 | 6 | 7 | 8 | 9 | 10 | 11 | 12 |
| | | | | A1 or A2 | A1 | A1 | A2 | A2 | A1 | A1 | A2 | A2 | A1 | A1 | A2 | A2 |
| | | | | LS or RS | RS | LS | RS | LS | RS | LS | RS | LS | RS | LS | RS | LS |
| | | | | 1 or 2 | 1 | 2 | 1 | 2 | 2 | 1 | 2 | 1 | 1 | 2 | 1 | 2 |

As shown above, the local/other determination "overlaps" on units 1 and 3, which will cause ambiguity issues for routing messages. For example, if the (A1,RS) interface in Unit 1 wants to send a message to the (A2, RS) in unit 1, it will not be able to determined whether this is node ID 3 or 11. For a three-vehicle train, the above shows there are routing issues for the outer units.

The following table shows the enhanced logic implemented in a three or more unit train in accordance with an embodiment of the invention.

| Vehicle | Node | Cab (A1 or A2) | Network (LS or RS) | Network (1 or 2) | Local/Other Determination Table (L = Local, R = Remote, S = Same node, -- = Nodes not connected) | | | | | | | | | | | |
|---|---|---|---|---|---|---|---|---|---|---|---|---|---|---|---|---|
| 1 | 1 | A1 | RS | 1 | S | -- | L | -- | -- | O M | -- | O M | O E | -- | O E | -- |
| | 2 | A1 | LS | 2 | - - | S | -- | L | O M | -- | O M | -- | -- | O E | -- | OE |
| | 3 | A2 | RS | 1 | L | -- | S | -- | -- | O M | -- | O M | O E | -- | O E | -- |
| | 4 | A2 | LS | 2 | - - | L | -- | S | O M | -- | O M | -- | -- | O E | -- | OE |
| 2 | 5 | A1 | RS | 2 | - - | O M | -- | O M | S | -- | L | -- | -- | O M | -- | OM |
| | 6 | A1 | LS | 1 | O M | -- | O M | -- | -- | S | -- | L | O M | -- | O M | -- |
| | 7 | A2 | RS | 2 | - - | O M | -- | O M | L | -- | S | -- | -- | O M | -- | OM |
| | 8 | A2 | LS | 1 | O M | -- | O M | -- | -- | L | -- | S | O M | -- | O M | -- |
| 3 | 9 | A1 | RS | 1 | O E | -- | O E | -- | -- | O M | -- | O M | S | -- | L | -- |
| | 10 | A1 | LS | 2 | - - | O E | -- | O E | O M | -- | O M | -- | -- | S | -- | L |
| | 11 | A2 | RS | 1 | O E | -- | O E | -- | -- | O M | -- | O M | L | -- | S | -- |
| | 12 | A2 | LS | 2 | - - | O E | -- | O E | O M | -- | O M | -- | -- | L | -- | S |
| | | | | Vehicle | 1 | | | | 2 | | | | 3 | | | |
| | | | | Node | 1 | 2 | 3 | 4 | 5 | 6 | 7 | 8 | 9 | 10 | 11 | 12 |
| | | | | A1 or A2 | A 1 | A1 | A2 | A2 | A1 | A1 | A2 | A2 | A1 | A1 | A2 | A2 |
| | | | | LS or RS | R S | LS | RS | LS | RS | LS | RS | LS | RS | LS | RS | LS |
| | | | | 1 or 2 | 1 | 2 | 1 | 2 | 2 | 1 | 2 | 1 | 1 | 2 | 1 | 2 |

In this logic there are now four node designations: S = Same; L = Local; OM = Other Middle; OE = Other End. In this way the ambiguity is resolved.

In accordance with an embodiment of the invention the following procedure is performed as an initialization step:
a) All nodes wake up start in the START mode.
b) Node 2 is the first to wake up.
c) Node 2 broadcasts a WU (Wake-up message) on the network but no node is there to receive it. Node 2 starts the Waiting End (WE) timer and switches into the WAIT mode.
d) Node 3 wakes up.
e) Node 3 broadcasts a WU. Node 3 starts a WE timer and switches into the WAIT mode.
f) Node 2 receives the WU from node 3:
   1) The countdown is stopped.
   2) The countdown is set to *WE* - *(quantity of WU received* * *(WE*/*10)).* The "quantity of WUs received" is limited to eight for the purpose of computing the countdown value.
   3) The waiting resumes.
g) Step e. is repeated for each new node waking-up.
h) Step f. is repeated by all nodes for each new WU received.
i) When no more WUs are broadcasted, the first node that wakes up (node 2) sets its WE timer to the lowest value following the last WU. It is the one to timeout first:
   1) Node 2 switches into the ELECTION mode.
   2) Node 2 broadcasts an Elections Occurring (EO).
   3) Node 2 sends a global ping (GP) to node 1 to make sure it is alive, because it is going to be the next master. If node 2 is going to be the master, no ping will be sent. Note that the election node selects the node with the lowest Neuron ID not in a middle unit to be the master (that is node 1).
   4) The timer Elected Ping Frequency (EPF) is started. If there is no answer, another node will be pinged.
   5) Node 1 replies to node 2 with a PA (ping answer).
   6) Node 2 selects node 1 as master and broadcasts an Elected Master (EM)1 to elect it. It selects the node with the lowest Neuron ID to be the master.
   7) Node 1 switches into the MASTER mode and starts the Master Table Transmit (MTT) timer.
   8) Node 2 sends a TT (Table Transmit) message to node 1 (master).
   9) Node 1, if required (i.e. the train is 3 or more units in size), sends a local ping to each node on its network side in order to determine which nodes are local and which nodes are in the other end vehicle.
   10)Node 1 builds the routing table and broadcasts a TT message.
   Messages over the CBTC network are sent using the Neuron ID (left or right side network) or in broadcast mode.

For messages to go through the LonWorks gateway the subnet is set at "2" and the message length is not be longer than 32 bytes. All messages with the exception of the local ping (LP) message use these settings. The LP message uses a subnet of "3" to prevent it passing through the gateway.

The ping message is used to find out whether a node is connected to the network and is working properly. This message may be global (subnet equal to "2") or local (subnet equal to "3") and is sent periodically by the master node to all nodes in the network. This process is used by the master to maintain the node table up to date. It is also used by an election node to find a working/connected node. The slave nodes require to be pinged at regular intervals by the master node. Nodes that are not pinged will elect a new master.

The information received from the ping messages is then used to build routing tables at the CIUs, which can then be used for subsequently addressing messages to an intended destination.

The structure of a typical ping message is:

| MESSAGE ATTRIBUTES | |
|---|---|
| Service type | Unacknowledged |
| Address type | Neuron ID |
| Total message length in bytes | 14 |

| MESSAGE CONTENT | |
|---|---|
| Code | 10 |
| Data | Node information of the source (7 bytes) |
| | Node information of the destination (7 bytes) |

In response to a ping message, the nodes send back a ping acknowledge message with the following structure:

| MESSAGE ATTRIBUTES | |
|---|---|
| Service type | Unacknowledged |
| Address type | Neuron ID |
| Total message length in bytes | 11 |

| MESSAGE CONTENT | |
|---|---|
| Code | 11 |
| Data | Node information of the sender (7 bytes) |
| | Number of nodes in the node table of the sender (1 bytes) |
| | Checksum of the node table of the sender (2 bytes) |
| | Number of statistics (1 byte); future provision; always 0 (1 byte) |

It will thus be seen that embodiments of the invention expand the capabilities of a LonWorks™ or similar network to allow for three train or more units to be connected in tandem, something which is not possible with in the original network design. It will be understood that the logic may be different for trains consisting of more than three train units. One skilled in the art will be able to configure the logic for more than three train units following the principles of the invention described above.

The described communication network thus allows the CBTC system to provide full on-board automatic train protection (ATP) for a train consisting of three train units, an important advantage that was not possible in the prior art.

It should be understood that the logic described herein applies to up to three train units. However, one skilled in the art will recognize that by modifying the logic, the concept of using local discovery messages can be applied to trains consisting of more than three train units.

## Claims

1. An intra-train network management system for a train comprising up to three train units (10) coupled together to form a train, each train unit comprising two terminal cars and zero or more intermediate cars between the terminal cars, the intra-train network management system comprising:
a communications interface unit (14) in each terminal car configured to establish at least two separate Communications-Based Train Control, CBTC, peer-to-peer networks within its associated train unit, wherein each network connects to distinct nodes within the train unit, and wherein the separate networks of coupled train units are crossed over between train units; and
a gateway associated with each terminal car for linking the respective networks of separate train units coupled into a train; and
wherein the network management system is configured to determine network topology within the train by sending:
a) global device discovery messages throughout the networks, and
b) local discovery messages within each train unit that are addressed such that they cannot penetrate the gateway(s) associated with that train unit;
wherein an on-board controller unit (12) is configured to build routing tables based on the determined network topology and to set a subnet mask of the local discovery messages to a value that will not penetrate the local gateway.

2. An intra-train network management system as claimed in claim 1, wherein the communications interface unit (14) is configured to send out the local discovery messages.

3. An intra-train network management system as claimed in claim 1 or 2, wherein the discovery messages are in the form of pings.

4. An intra-train network management system as claimed in claim 3, wherein each network comprises a set of nodes configured such that at startup, the first node to wake up sends a global ping, one node in each network is selected as the master, and the node selected as the master sends a local ping to resolve ambiguities resulting from the global ping prior to broadcasting routing tables for the networks; wherein said ambiguities arise due to similar nodes being connected to the same location in different train units' networks such that the global ping cannot distinguish between them.

5. A method of managing a network management system in a train comprising up to three train units (10) coupled together to form a train, each train unit comprising two terminal cars and zero or more intermediate cars between the terminal cars, the method comprising:
providing a communications interface unit (14) in each terminal car;
establishing with said communications interface unit at least two separate Communications-Based Train Control, CBTC, peer-to-peer networks within each associated train unit, wherein each network connects to distinct nodes within the train unit, and wherein the separate networks of coupled train units are crossed over between train units;
associating a gateway with each terminal car in order to link the respective networks of separate train units coupled into a train;
determining network topology within the train by sending:
a) global device discovery messages throughout the networks, and
b) local discovery messages within each train unit that are addressed such that they cannot penetrate the gateway(s) associated with that train unit; and
building routing tables for the networks based on the determined network topology; wherein a subnet mask of the local discovery messages are set to a value that will not penetrate a local gateway of the train units.

6. A method as claimed in claim 5, wherein each network comprises a set of nodes, and wherein the discovery messages are in the form of pings.

7. A method as claimed in claim 6, wherein each network comprises a set of nodes and at startup, the first node to wake up sends a global ping, one node in each network is selected as the master, and the node selected as the master sends a local ping to resolve ambiguities resulting from the global ping prior to broadcasting routing tables for the network.

8. A communications interface unit (14) for an intra-train network management system for a train comprising up to three train units (10) coupled together to form a train, each train unit comprising two terminal cars and zero or more intermediate cars between the terminal cars, wherein the communications interface unit is configured to establish at least two separate Communications-Based Train Control, CBTC, peer-to-peer networks within its associated train unit, wherein each network connects to distinct nodes within the train unit, wherein the separate networks of coupled train units are crossed over between train units and are linked by a gateway associated with each terminal car; and wherein the communications interface unit is configured to determine network topology within the train by sending:
a) global device discovery messages throughout the networks, and
b) local discovery messages within each train unit that are addressed such that they cannot penetrate the gateway(s) associated with that train unit.

9. A communications interface unit (14) as claimed in claim 8, wherein the discovery messages are in the form of pings.

## Patentansprüche

1. Zuginternes Netzwerkverwaltungssystem für einen Zug, umfassend bis zu drei Zugeinheiten (10), welche zusammengekoppelt sind, um einen Zug zu bilden, wobei jede Zugeinheit zwei Endwaggons und Null oder mehrere Zwischenwaggons zwischen den Endwaggons, wobei das Zuginterne Netzverwaltungssystem umfasst:
eine Kommunikationsschnittstelleneinheit (14) in jedem Endwaggon, welche konfiguriert ist, um mindestens zwei getrennte kommunikationsbasierte Zugsteuerungs-(CBTC)-Peer-to-Peer-Netzwerke innerhalb deren zugeordneten Zugeinheit zu erstellen, wobei jedes Netzwerk sich mit getrennten Knoten innerhalb der Zugeinheit verbindet und wobei die getrennten Netzwerke von gekoppelten Zugeinheiten zwischen Zugeinheiten überquert werden; und
ein Gateway, welches jedem Endwaggon zugeordnet ist, um die entsprechenden Netzwerke von separaten Zugeinheiten zu verknüpfen, welche in einem Zug gekoppelt sind; und
wobei das Netzwerkverwaltungssystem konfiguriert ist, um eine Netzwerktopologie innerhalb des Zuges zu bestimmen, indem Folgendes gesendet wird:
a) globale Vorrichtungsentdeckungsnachrichten durch die gesamten Netzwerke, und
b) lokale Entdeckungsnachrichten innerhalb jeder Zugeinheit, welche so adressiert werden, dass sie das oder die Gateways nicht penetrieren können, welche der Zugeinheit zugeordnet sind;
wobei eine integrierte Steuereinheit (12) konfiguriert ist, um Routing-Tabellen basierend auf der bestimmten Netzwerktopologie zu erstellen und um eine Subnetz-Maske der lokalen Entdeckungsnachrichten auf einen Wert einzustellen, welcher das lokale Gateway nicht penetrieren wird.

2. Zuginternes Netzverwaltungssystem nach Anspruch 1, wobei die Kommunikationsschnittstelleneinheit (14) konfiguriert ist, um die lokalen Entdeckungsnachrichten auszusenden.

3. Zuginternes Netzverwaltungssystem nach Anspruch 1 oder 2, wobei die Entdeckungsnachrichten die Form von Pings aufweisen.

4. Zuginternes Netzverwaltungssystem nach Anspruch 3, wobei jedes Netzwerk einen Satz von Knoten umfasst, welche so konfiguriert sind, dass beim Starten, der erste Knoten, der aufwacht, ein globales Ping sendet, ein Knoten in jedem Netzwerk als Master ausgewählt wird und der als Master ausgewählte Knoten ein lokales Ping sendet, um Unklarheiten zu lösen, die von dem globalen Ping vor der Übertragung von Routing-Tabellen für die Netzwerke stammen; wobei die Unklarheiten verursacht werden, weil ähnliche Knoten mit derselben Position in unterschiedlichen Zugeinheitsnetzwerken verbunden sind, sodass das globale Ping zwischen diesen nicht unterscheiden kann.

5. Verfahren zum Verwalten eines Netzwerkverwaltungssystems in einem Zug, umfassend bis zu drei Zugeinheiten (10), welche zusammengekoppelt sind, um einen Zug zu bilden, wobei jede Zugeinheit zwei Endwaggons und Null oder mehr Zwischenwaggons zwischen den Endwaggons umfasst, wobei das Verfahren umfasst:
Bereitstellen einer Kommunikationsschnittstelleneinheit (14) in jedem Endwaggon;
Erstellen, mit der Kommunikationsschnittstelleneinheit mindestens zweiergetrennter kommunikationsbasierter Zugsteuerungs- (CBTC)-Peer-to-Peer-Netzwerke innerhalb jeder zugeordneten Zugeinheit, wobei jedes Netzwerk sich mit getrennten Knoten innerhalb der Zugeinheit verbindet und wobei die getrennten Netzwerke von gekoppelten Zugeinheiten zwischen Zugeinheiten überkreuzt werden;
Zuordnen eines Gateways zu jedem Endwaggon, um die entsprechenden Netzwerke von getrennten Zugeinheiten zu verknüpfen, welche in einem Zug gekoppelt werden;
Bestimmen der Netzwerktopologie innerhalb des Zugs durch Senden der Folgenden:
a) globale Vorrichtungsentdeckungsnachrichten durch die gesamten Netzwerke, und
b) lokale Entdeckungsnachrichten innerhalb jeder Zugeinheit, welche so adressiert werden, dass sie das oder die Gateways nicht penetrieren können, welche der Zugeinheit zugeordnet sind; und
Erstellen von Routing-Tabellen für die Netzwerke, basierend auf der bestimmten Netzwerktopologie;
wobei eine Subnetz-Maske der lokalen Entdeckungsnachrichten auf einen Wert eingestellt wird, welcher ein lokales Gateway der Zugeinheiten nicht penetrieren wird.

6. Verfahren nach Anspruch 5, wobei jedes Netzwerk einen Satz von Knoten umfasst, und wobei die Entdeckungsnachrichten die Form von Pings aufweisen.

7. Verfahren nach Anspruch 6, wobei jedes Netzwerk einen Satz von Knoten umfasst und beim Starten der erste Knoten, der aufwacht, ein globales Ping sendet, ein Knoten in jedem Netzwerk als Master ausgewählt wird und der als Master ausgewählte Knoten ein lokales Ping sendet, um Unklarheiten zu lösen, die von dem globalen Ping vor der Übertragung von Routing-Tabellen für die Netzwerke stammen.

8. Kommunikationsschnittstelleneinheit (14) für ein zuginternes Netzwerkverwaltungssystem für einen Zug, umfassend bis zu drei Zugeinheiten (10), welche zusammengekoppelt sind, um einen Zug zu bilden, wobei jede Zugeinheit zwei Endwaggons und Null oder mehrere Zwischenwaggons zwischen den Endwaggons umfasst, wobei die Kommunikationsschnittstelleneinheit konfiguriert ist, um mindestens zwei getrennte kommunikationsbasierte Zugsteuerungs- (CBTC)-Peer-to-Peer-Netzwerke innerhalb deren zugeordneten Zugeinheit zu erstellen, wobei jedes Netzwerk sich mit getrennten Knoten innerhalb der Zugeinheit verbindet, wobei die getrennten Netzwerke von gekoppelten Zugeinheiten zwischen Zugeinheiten überquert werden und durch ein Gateway verbunden sind, welches jedem Endwaggon zugeordnet ist; und wobei die Kommunikationsschnittstelleneinheit konfiguriert ist, um eine Netzwerktopologie innerhalb des Zugs zu bestimmen, indem Folgendes gesendet wird:
a) globale Vorrichtungsentdeckungsnachrichten durch die gesamten Netzwerke, und
b) lokale Entdeckungsnachrichten innerhalb jeder Zugeinheit, welche so adressiert werden, dass sie das oder die Gateways nicht penetrieren können, welche der Zugeinheit zugeordnet sind.

9. Kommunikationsschnittstelleneinheit (14) nach Anspruch 8, wobei die Entdeckungsnachrichten die Form von Pings aufweisen.

## Revendications

1. Système de gestion de réseau intra-train pour un train qui comprend jusqu'à trois unités de train (10) qui sont couplées ensemble pour former un train, chaque unité de train comprenant deux wagons terminaux et zéro ou plusieurs wagons intermédiaires entre les wagons terminaux, le système de gestion de réseau intra-train comprenant :
une unité d'interface de communication (14) dans chaque wagon terminal qui est configurée pour établir au moins deux réseaux homologue à homologue de contrôle du trafic ferroviaire basé sur communications, CBTC, séparés à l'intérieur de son unité de train associée, dans lequel chaque réseau se connecte à des nœuds distincts à l'intérieur de l'unité de train et dans lequel les réseaux séparés d'unités de train couplées sont croisés entre les unités de train ; et
une passerelle qui est associée à chaque wagon terminal pour relier les réseaux respectifs d'unités de train séparées qui sont couplées dans un train ; et
dans lequel le système de gestion de réseau est configuré pour déterminer une topologie de réseau à l'intérieur du train en envoyant :
a) des messages de découverte de dispositif globaux sur l'ensemble des réseaux ; et
b) des messages de découverte locaux à l'intérieur de chaque unité de train qui sont adressés de telle sorte qu'ils ne puissent pas pénétrer à l'intérieur de la/des passerelle(s) qui est/sont associée(s) à cette unité de train ;
dans lequel une unité de contrôle embarquée (12) est configurée pour élaborer des tables de routage sur la base de la topologie de réseau déterminée et pour définir un masque de sous-réseau des messages de découverte locaux selon une valeur qui ne pénétrera pas à l'intérieur de la passerelle locale.

2. Système de gestion de réseau intra-train selon la revendication 1, dans lequel l'unité d'interface de communication (14) est configurée pour envoyer les messages de découverte locaux.

3. Système de gestion de réseau intra-train selon la revendication 1 ou 2, dans lequel les messages de découverte sont sous la forme d'utilitaires ping.

4. Système de gestion de réseau intra-train selon la revendication 3, dans lequel chaque réseau comprend un jeu de nœuds qui sont configurés de telle sorte que lors d'un démarrage, le premier nœud à se réveiller envoie un utilitaire ping global, qu'un nœud dans chaque réseau soit sélectionné en tant que maître et que le nœud sélectionné en tant que maître envoie un utilitaire ping local pour résoudre des ambiguïtés qui résultent de l'utilitaire ping global avant la diffusion de tables de routage pour les réseaux ; dans lequel lesdites ambiguïtés résultent du fait que des nœuds similaires sont connectés à la même localisation dans différents réseaux d'unités de train de sorte que l'utilitaire ping global ne peut pas distinguer entre eux.

5. Procédé de gestion d'un système de gestion de réseau dans un train qui comprend jusqu'à trois unités de train (10) qui sont couplées ensemble pour former un train, chaque unité de train comprenant deux wagons terminaux et zéro ou plusieurs wagons intermédiaires entre les wagons terminaux, le procédé comprenant :
la fourniture d'une unité d'interface de communication (14) dans chaque wagon terminal ;
l'établissement, avec ladite unité d'interface de communication, d'au moins deux réseaux homologue à homologue de contrôle du trafic ferroviaire basé sur communications, CBTC, séparés à l'intérieur de chaque unité de train associée, dans lequel chaque réseau se connecte à des nœuds distincts à l'intérieur de l'unité de train et dans lequel les réseaux séparés d'unités de train couplées sont croisés entre les unités de train ;
l'association d'une passerelle à chaque wagon terminal pour relier les réseaux respectifs d'unités de train séparées qui sont couplées dans un train ;
la détermination d'une topologie de réseau à l'intérieur du train en envoyant :
a) des messages de découverte de dispositif globaux sur l'ensemble des réseaux, et
b) des messages de découverte locaux à l'intérieur de chaque unité de train qui sont adressés de telle sorte qu'ils ne puissent pas pénétrer à l'intérieur de la/des passerelle(s) qui est/sont associée(s) à cette unité de train ; et
l'élaboration de tables de routage pour les réseaux sur la base de la topologie de réseau déterminée ;
dans lequel un masque de sous-réseau des messages de découverte locaux est défini selon une valeur qui ne pénétrera pas à l'intérieur d'une passerelle locale des unités de train.

6. Procédé selon la revendication 5, dans lequel chaque réseau comprend un jeu de nœuds, et dans lequel les messages de découverte sont sous la forme d'utilitaires ping.

7. Procédé selon la revendication 6, dans lequel chaque réseau comprend un jeu de nœuds et lors d'un démarrage, le premier nœud à se réveiller envoie un utilitaire ping global, un nœud dans chaque réseau est sélectionné en tant que maître et le nœud sélectionné en tant que maître envoie un utilitaire ping local pour résoudre des ambiguïtés qui résultent de l'utilitaire ping global avant la diffusion de tables de routage pour le réseau.

8. Unité d'interface de communication (14) pour un système de gestion de réseau intra-train pour un train qui comprend jusqu'à trois unités de train (10) qui sont couplées ensemble pour former un train, chaque unité de train comprenant deux wagons terminaux et zéro ou plusieurs wagons intermédiaires entre les wagons terminaux, dans laquelle l'unité d'interface de communication est configurée pour établir au moins deux réseaux homologue à homologue de contrôle du trafic ferroviaire basé sur communications, CBTC, séparés à l'intérieur de son unité de train associée, dans laquelle chaque réseau se connecte à des nœuds distincts à l'intérieur de l'unité de train, dans laquelle les réseaux séparés d'unités de train couplées sont croisés entre les unités de train et sont reliés par une passerelle qui est associée à chaque wagon terminal ; et dans laquelle l'unité d'interface de communication est configurée pour déterminer une topologie de réseau à l'intérieur du train en envoyant :
a) des messages de découverte de dispositif globaux sur l'ensemble des réseaux ; et
b) des messages de découverte locaux à l'intérieur de chaque unité de train qui sont adressés de telle sorte qu'ils ne puissent pas pénétrer à l'intérieur de la/des passerelle(s) qui est/sont associée(s) à cette unité de train.

9. Unité d'interface de communication (14) selon la revendication 8, dans laquelle les messages de découverte sont sous la forme d'utilitaires ping.
